# FASCICULE DE BREVET EUROPEEN

(11) **EP 3 798 363 B1**
(45) Date de publication et mention de la délivrance du brevet: **07.06.2023**
(21) Numéro de dépôt: 20204146.3
(22) Date de dépôt: 23.11.2017
(51) Int. Cl.: E01H 1/08

(54) **BALAYEUSE DE VOIRIE**
STRASSENKEHRMASCHINE
ROAD SWEEPING MACHINE

(30) Priorité: 24.11.2016 BE 201605878; 22.11.2017 BE 201705853; 22.11.2017 BE 201705854
(43) Date de publication de la demande: 31.03.2021
(62) Demande divisionnaire de: 17805169.4
(73) Titulaire: Lange Christian SA, 5300 Andenne (BE)
(72) Inventeur: LANGE, Christian, 5350 Ohey (BE); LANGOUCHE, Jean-Benoît, 4170 Comblain-au-Pont (BE); BUDDEKER, Frank, 4350 Remicourt (BE); MARÉCHAL, Adrien, 4600 Visé (BE); BRUGGEMAN, Tom, 9210 Haasdonk (BE)
(74) Mandataire: AWA Benelux

(56) Documents cités:
- WO-A1-2014/012158
- DE-A1- 2 924 502
- FR-A1- 2 912 349
- US-A- 2 960 708
- US-A1- 2014 101 874

## Description

### Objet de l'invention

La présente invention se rapporte à une balayeuse de voirie à conducteur porté. Il s'agit d'un véhicule de nettoyage muni d'un moteur thermique ou électrique et de un ou plusieurs balais tournants en contact avec le sol, ainsi que de systèmes d'aspiration et de récolte de déchets, et qui comprend une cabine pour le conducteur.

### Arrière-plan technologique

Les balayeuses du type tel que décrit dans la présente invention sont utilisées dans des environnements urbains ou industriels, pour le nettoyage de grandes surfaces. Le conducteur est assis dans la cabine, où il a accès aux éléments de contrôle de direction du véhicule ainsi qu'aux éléments de contrôle des moyens de nettoyage. Pour la plupart des machines connues aujourd'hui, ces moyens comprennent une paire de bras placés en dessous de la cabine et qui s'étendent devant et/ou à la périphérie du véhicule, et qui portent à leur extrémité un balai tournant pour dégager les déchets du sol. Les déchets sont amenés par les balais vers une bouche d'aspiration centrale, d'où ils sont aspirés par l'action d'une turbine vers un conteneur intégré dans la balayeuse.

US2014/101874 A1 décrit une balayeuse conforme au préambule de la revendication 1.

Un problème pour ce type de machines est lié au contrôle adéquat des bras porte-balai. Il est avantageux de maintenir les balais sur le sol avec une pression constante, mais ceci est souvent impossible à réaliser par les systèmes actuels. En outre, les bras porte-balai sont souvent peu capables d'absorber les chocs causés par des obstacles rencontrés sur le terrain, ce qui mène à des blocages fréquents.

### Résumé de l'invention

La présente invention se rapporte à une balayeuse telle que décrite dans les revendications annexées.

Un aspect particulier concerne une balayeuse dans laquelle le mouvement des bras porte-balai dans un plan vertical est actionné par un ensemble de quatre profilés, disposés en deux paires, qui chacune forment un parallélogramme déformable, et pour laquelle la déformation du parallélogramme est actionnée par un vérin et par le poids propre du bras porte-balai. Le vérin est configuré de manière à rester en dessous des profilés supérieurs des deux paires, quand le bras porte-balai est levé au maximum.

Les termes 'vertical' et 'horizontal' utilisés dans la présente description ainsi que dans les revendications sont applicables à une balayeuse lors qu'elle se trouve sur un terrain essentiellement horizontal.

L'invention est liée à une balayeuse comprenant un châssis, au moins trois roues, un moteur de propulsion, une cabine pour le conducteur, un ou plusieurs balais, chaque balai pouvant effectuer une rotation par rapport à une armature montée à l'extrémité d'un bras porte-balai qui s'étend devant et/ou à la périphérie de la cabine, ainsi que des moyens d'aspiration et de collecte de déchets, dans laquelle chacun des bras porte- balai comprend :
- deux paires de profilés, chaque paire comprenant un profilé supérieur et un profilé inférieur, les profilés supérieurs et inférieurs étant :
   - respectivement reliés au châssis ou à une structure reliée au châssis, par une première paire de pivots, permettant le pivotement des profilés par rapport au châssis autour d'axes horizontaux,
   - respectivement reliés à l'armature du balai, par une deuxième paire de pivots, permettant le pivotement des profilés par rapport à l'armature autour d'axes horizontaux,
      de sorte que les quatre pivots de chaque paire de profilés forment un parallélogramme déformable, les deux parallélogrammes ayant essentiellement les mêmes dimensions et étant situés dans des plans verticaux parallèles,
- un vérin monté entre les paires de profilés, le vérin étant configuré pour actionner la déformation desdits parallélogrammes de manière à lever ou baisser le balai dans un plan vertical,
et dans laquelle le vérin est configuré de telle sorte que lorsque le balai est levé au maximum, le vérin est positionné en dessous des profilés supérieurs desdites paires de profilés,
caractérisée en ce que :
- les pivots dit inférieurs de chacune des paires de profilés sont disposés en arrière en direction horizontale par rapport aux pivots dit supérieurs
- chacun des profilés supérieurs et inférieurs de chaque paire de profilés est formé de deux parties droites solidaires l'une de l'autre, une première partie présente du côté de l'armature du balai qui est essentiellement orientée horizontalement quand le balai est levé au maximum, et une deuxième partie présente du côté du châssis qui est inclinée vers le bas quand le balai est levé au maximum.
Selon une forme d'exécution de cet aspect de l'invention, le vérin est un vérin hydraulique comprenant un cylindre relié de manière pivotable au châssis ou à une structure connectée au châssis par un premier pivot et un piston qui est solidaire d'une tige, ladite tige étant reliée de manière pivotable à l'armature du balai par un deuxième pivot, le piston divisant le cylindre en deux compartiments, un premier compartiment présent du côté du châssis et un second compartiment présent du côté du balai, et dans laquelle :
- le premier pivot du vérin est situé au-dessus desdites premières paires de pivots des profilés,
- le deuxième pivot du vérin est situé entre lesdites deuxièmes paires de pivots des profilés.

Selon une forme d'exécution spécifique de cet aspect de l'invention, le vérin est un vérin hydraulique comprenant un cylindre relié de manière pivotable au châssis ou à une structure reliée au châssis par un premier pivot et un piston qui est solidaire d'une tige, ladite tige étant reliée de manière pivotable à l'armature du balai par un deuxième pivot, le piston divisant le cylindre en deux compartiments, un compartiment présent du côté du châssis et un compartiment présent du côté du balai, dans laquelle le vérin est relié à un réservoir à fluide hydraulique et à une pompe hydraulique et/ou à un accumulateur, et dans laquelle le vérin est configuré de sorte que :
- pour lever le balai, le compartiment du côté de l'armature est mis sous pression hydraulique, de sorte que le balai est levé par la tige qui tire sur le bras porte-balai,
- pour baisser le balai, la pression dans le compartiment du côté de l'armature est diminuée, de sorte que le poids du bras porte-balai, de l'armature et du balai font descendre le balai.
Selon une forme spécifique, seul le compartiment du côté du balai est relié à ladite pompe. Selon une autre forme, les deux compartiments font partie d'un circuit hydraulique comprenant la pompe, éventuellement un ou plusieurs accumulateurs, et le réservoir.

### Brève description des figures

La figure 1 représente une vue d'ensemble en perspective d'une balayeuse faisant l'objet de l'invention.
Les figures 2a-2c représentent des vues schématiques qui montrent de manière conceptuelle un mécanisme pour contrôler le mouvement des balais dans un plan horizontal, selon une première forme d'exécution non revendiquée.
Les figures 3a-3c représentent des vues schématiques qui montrent comment le mécanisme présenté à la figure 2 est capable d'absorber les chocs latéraux et/ou frontaux.
La figure 4 représente une forme d'exécution d'un mécanisme qui reprend les fonctionnalités démontrées aux figures 2 et 3.
Les figures 5a et 5b représentent des vues schématiques qui montrent des mécanismes qui ne reprennent que l'une des fonctionnalités antichocs illustrées aux figures 2 et 3.
Les figures 6a-6c représentent des vues schématiques qui montrent un mécanisme pour contrôler le mouvement des balais dans un plan horizontal, selon une deuxième forme d'exécution.
Les figures 7a-7c représentent des vues schématiques qui montrent comment le mécanisme représenté à la figure 6 est capable d'absorber les chocs latéraux et/ou frontaux.
Les figures 8a et 8b représentent des vues schématiques qui montrent un mécanisme qui reprend les fonctionnalités illustrées aux figures 6 et 7.
La figure 9 représente le mécanisme de la figure 6, pourvu d'un ressort qui absorbe les chocs frontaux.
Les figures 10a-10c représentent des vues schématiques qui montrent un mécanisme pour contrôler le mouvement des balais dans un plan horizontal, selon une troisième forme d'exécution.
Les figures 11a-11c représentent des vues schématiques qui montrent comment le mécanisme représenté à la figure 9 est capable d'absorber les chocs latéraux et/ou frontaux.
La figure 12 représente le mécanisme des figures 10 et 11, pourvu d'un ressort qui absorbe les chocs frontaux.
Les figures 13a et 13b représentent des vues de profil du bras porte-balai et de son mécanisme en position levée et abaissée dans un plan vertical, selon l'invention.

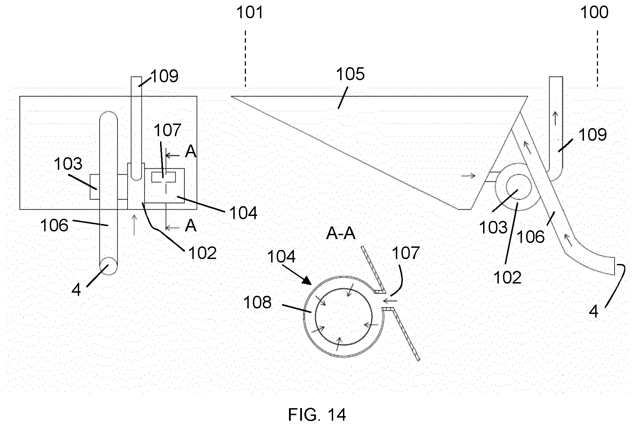

La figure 14 représente une disposition de la turbine d'aspiration et du filtre, selon un aspect non revendiqué.

### Description détaillée de l'invention

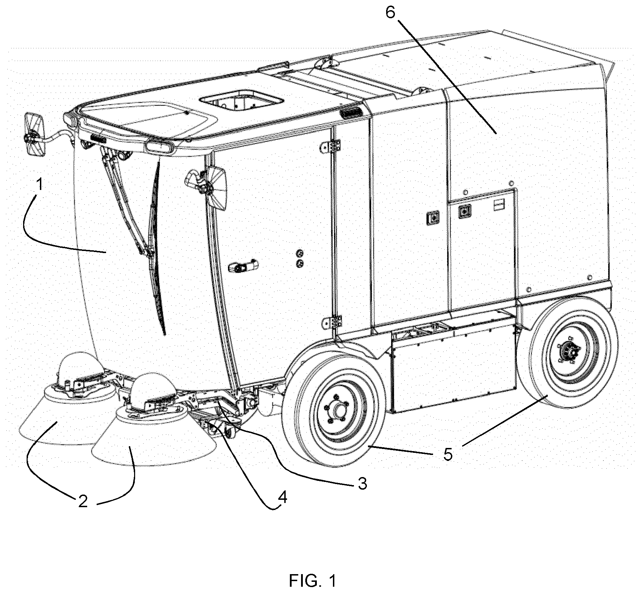

La figure 1 représente une vue générale d'une balayeuse qui forme l'objet de l'invention. On y voit la cabine 1 du conducteur, les balais 2 montés sur les bras porte-balai 3, la bouche d'aspiration 4, les roues 5 du véhicule. Dans le compartiment 6 se trouvent la turbine d'aspiration et un conteneur pour récolter les déchets. La balayeuse comprend également un moteur de propulsion qui peut être un moteur électrique ou toute autre source d'énergie applicable pour ce genre de véhicule. La balayeuse est de préférence un véhicule à quatre roues mais peut de manière générale avoir au moins trois roues.

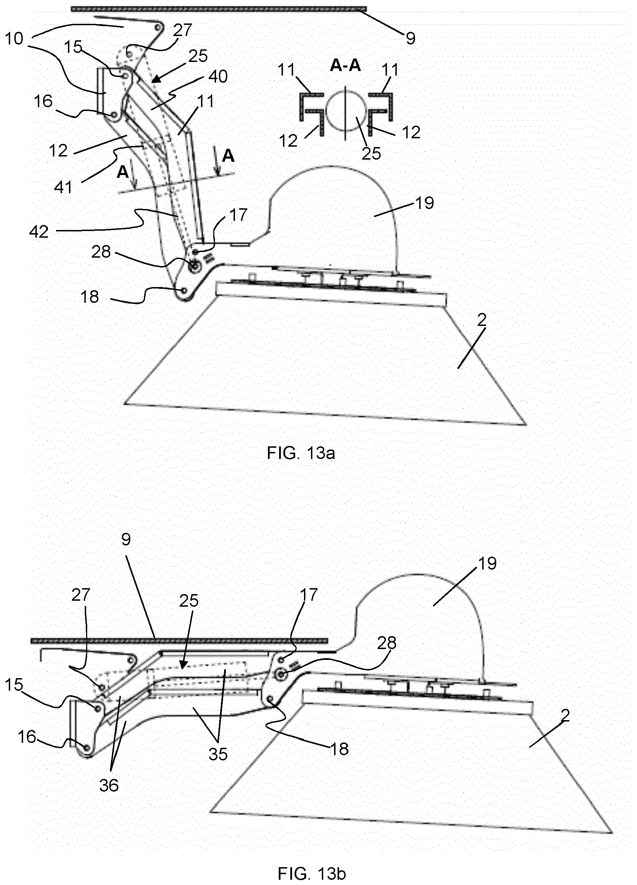

Selon un aspect de l'invention, les bras porte-balai 3 dans une balayeuse selon l'invention sont construits de telle manière qu'illustrée aux figures 13a et 13b, qui représentent un desdits bras porte-balai dans ses deux positions extrêmes : abaissé au maximum (fig. 13a) et levé au maximum (fig. 13b) par rapport au plancher 9 de la cabine 1. On voit que le bras porte-balai est formé par deux paires de profilés, chacune des paires comprenant un profilé supérieur 11 et un profilé inférieur 12. A une extrémité, les profilés de chaque paire sont reliés de manière pivotable au châssis 10 de la balayeuse par des pivots 15 et 16. A l'autre extrémité, les profilés de chaque paire sont reliés de manière pivotable par des pivots 17 et 18 à une armature 19 qui maintient le balai 2. Le balai 2 peut tourner autour de son axe central par rapport à ladite armature 19 qui comprend un moteur électrique pour actionner la rotation du balai. Les pivots 15, 16, 17, 18 de chaque paire de profilés forment deux parallélogrammes de mêmes dimensions et qui sont déformables dans deux plans verticaux parallèles, de sorte que la déformation de ces parallélogrammes actionne le déplacement du balai 2 dans le plan vertical. La déformation des parallélogrammes est actionnée par le poids propre du bras porte-balai 3 et par un vérin 25 qui est relié de manière pivotable d'un côté au châssis 10 par un premier pivot 27 et de l'autre côté à l'armature 19 du balai par un deuxième pivot 28. Le parallélogramme a pour avantage de maintenir constante la position relative de la brosse par rapport au sol. Dans la forme d'exécution représentée aux figures, le vérin 25 est un vérin hydraulique. D'autres types de vérins tel que des vérins électriques sont également utilisables.

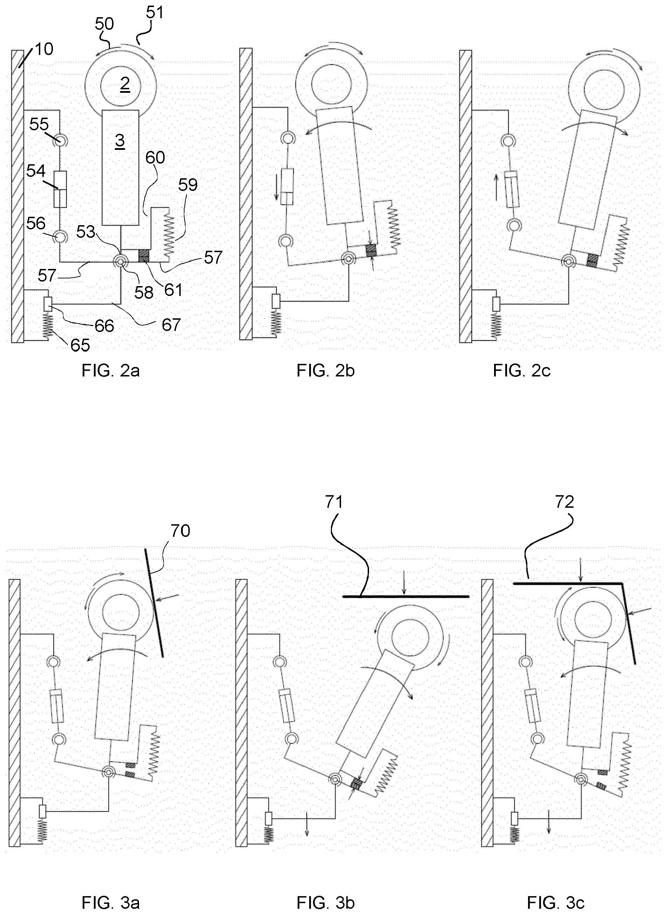

Quand le balai 2 est levé au maximum (fig. 13b), le vérin 25 ne dépasse pas la hauteur des profilés supérieurs 11. Cette construction est donc relativement compacte dans la direction verticale, ce qui permet de baisser le niveau du plancher 9 de la cabine comparé aux balayeuses existantes. Ceci permet donc de construire une cabine plus volumineuse sans changer la hauteur de la machine. Dans la forme d'exécution représentée à la figure 2, le pivot 27 qui relie le vérin 25 au châssis 10 se trouve au-dessus des pivots 15 et 16 de chaque paire de profilés. Le pivot 28 qui relie le vérin 25 à l'armature 19 du balai se trouve entre les pivots 17 et 18 de chaque paire de profilés (vu en direction verticale). De plus, ainsi que représenté à la figure 2b (en position du balai levé au maximum), les profilés comprennent une partie horizontale 35 en direction du balai et une partie inclinée vers le bas 36 en direction du châssis 10, de sorte que les pivots 15 et 16 se trouvent en dessous des pivots 17 et 18. Cette construction permet au vérin 25 de rester essentiellement au milieu des 4 profilés sur la majorité du trajet du balai.

Toujours tel que représenté à la figure 13, les pivots inférieurs 16 et 18 sont en arrière en direction horizontale respectivement par rapport aux pivots supérieurs 15 et 17. Cette construction permet un débattement vers le bas plus important du balai comparé au cas où les pivots 15-16 et 17-18 se trouvent sur de mêmes lignes verticales.

De préférence, les profilés 11 et 12 ont une section telle qu'illustrée par la vue en coupe représentée à la figure 13a. La section des profilés est en forme d'équerre. Les profilés supérieurs 11 de chaque paire sont montés de sorte que l'espace ouvert de l'équerre est dirigé vers le bas, ce qui permet aux profilés inférieurs 12 de s'emboîter dans ledit espace ouvert des profilés supérieurs 11. D'autres formes de sections emboîtables des profilés sont envisageables. Cette configuration augmente le débattement possible des balais. Cela permet également de réduire l'encombrement (ou la hauteur) verticale du parallélogramme.

Avantageusement, quand le vérin 25 est un vérin hydraulique, le vérin est actionné de la manière suivante : le vérin comprend un cylindre 40 et un piston 41, le cylindre étant relié de manière pivotable au châssis 10 par un premier pivot 27, le piston 41 étant solidaire d'une tige 42 qui est reliée de manière pivotable à l'armature 19 du balai par un deuxième pivot 28. Le piston divise donc le cylindre en deux compartiments, un compartiment présent du côté du châssis 10 et un compartiment présent du côté du balai 2.

La balayeuse comprend des moyens de mise sous pression hydraulique du vérin 25. Comme connu de l'état de la technique, ces moyens peuvent comprendre une pompe hydraulique, un ou plusieurs accumulateurs hydrauliques et un réservoir à fluide hydraulique. Selon une première forme d'exécution, seul le compartiment présent du côté du balai 2 est relié au réservoir par la pompe et/ou par un accumulateur. Pour lever le bras porte-balai 3, ce compartiment est mis sous pression. Pour abaisser le bras, la pression dans ce compartiment est diminuée de sorte que le poids du bras porte-balai 3 fait descendre le bras. Quand les balais sont en contact avec le sol, la pression est maintenue à un niveau qui empêche que le poids complet des bras n'appuie sur les balais, ce qui accentuerait l'usure des balais. Selon une autre forme d'exécution, les deux compartiments sont inclus dans un circuit hydraulique. Le deuxième compartiment (côté châssis) est, dans ce cas, connectée au retour du réservoir pour avoir une légère pression qui peut stabiliser les mouvements du vérin.

Dans chacune des formes d'exécution décrites ci-dessus, la tige 42 du vérin 25 va tirer le bras 3 vers le haut quand la pression est augmentée au compartiment du vérin 25 du côté du balai. Ce mode de fonctionnement permet un réglage efficace de la force exercée par le balai 2 sur le sol. Plus particulièrement, le réglage permet à ladite force de rester stable même quand la balayeuse opère en terrain irrégulier. Un système de réglage automatique est de préférence prévu pour régler la pression dans les compartiments en fonction d'une pression prédéterminée que les balais doivent exercer sur le sol.

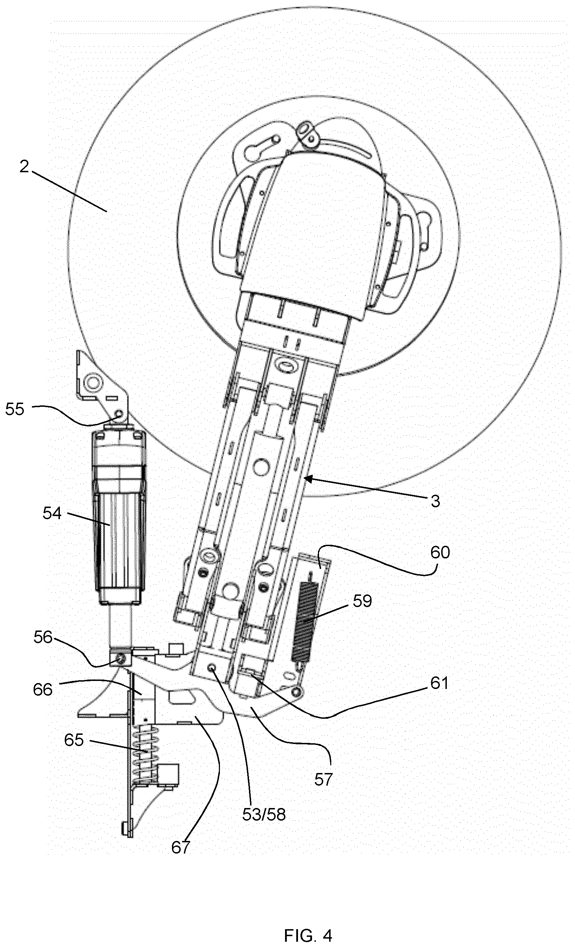

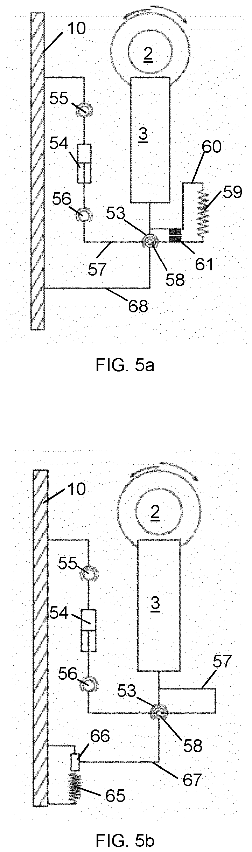

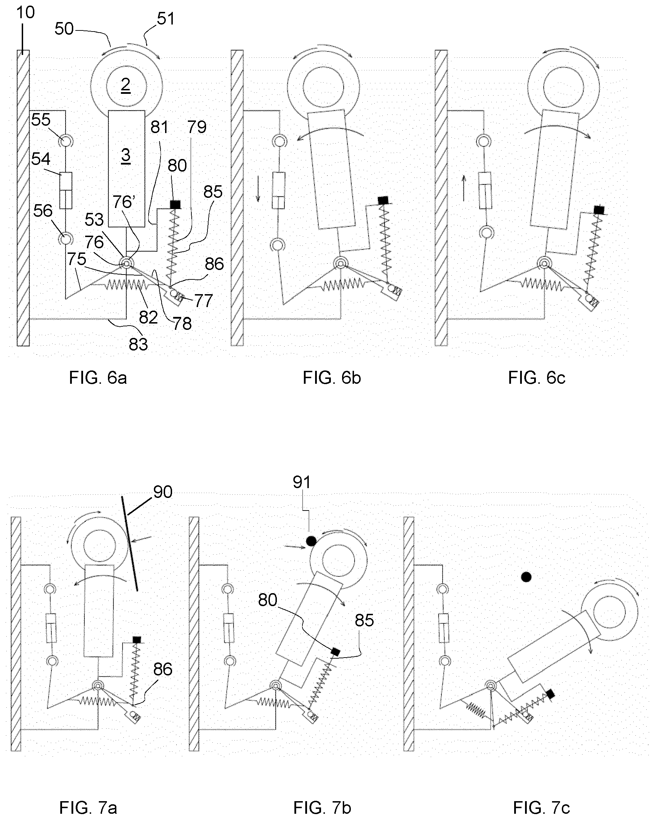

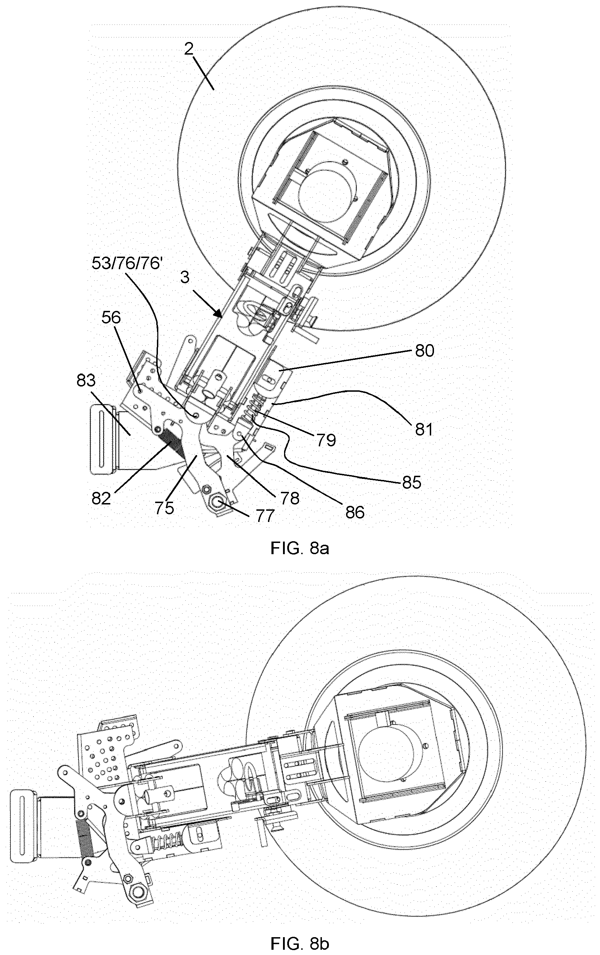

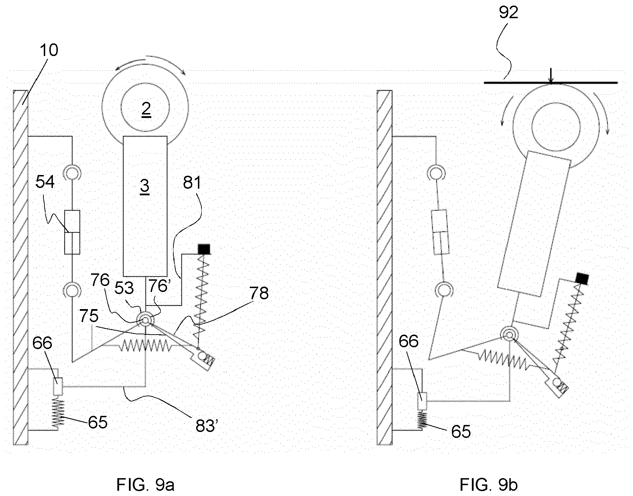

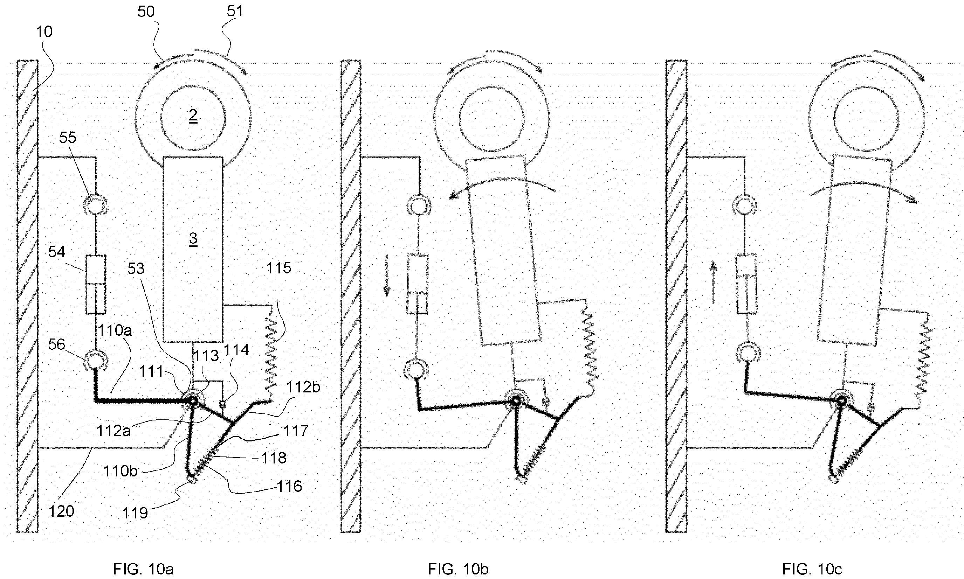

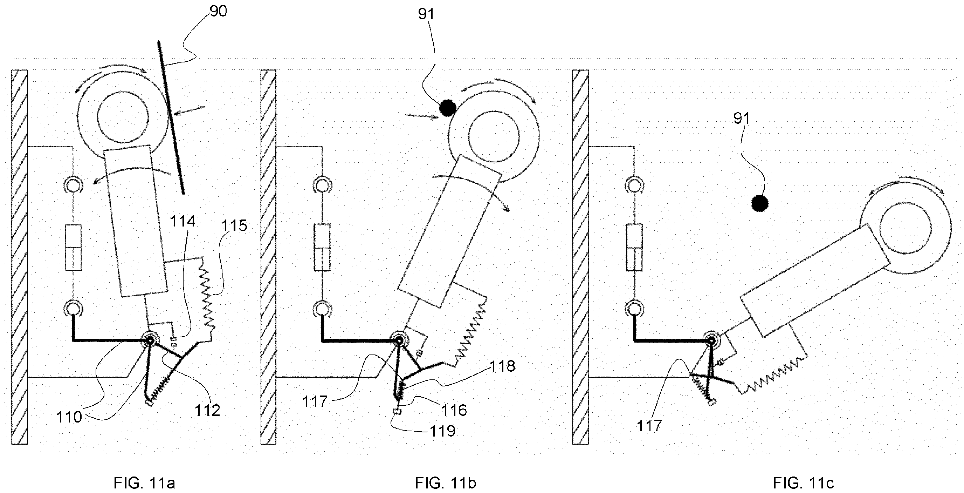

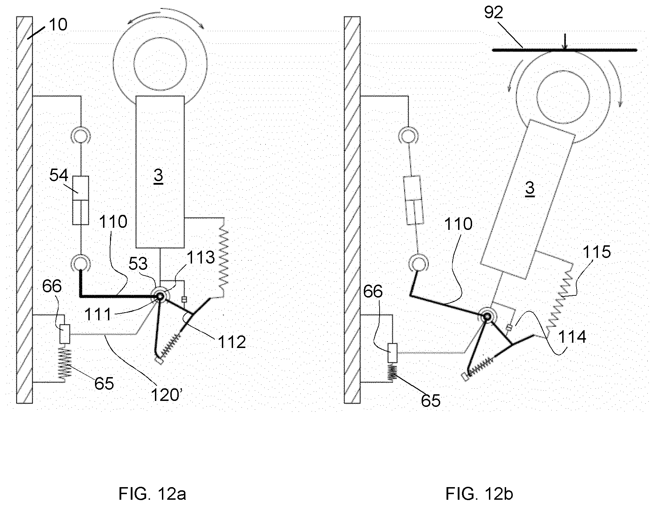

Au lieu d'être relié directement au châssis 10 par les pivots 15 et 16 (pour les profilés) et 27 (pour le vérin), le bras porte balai 3 décrit ci-dessus pourrait être relié à une structure qui est elle-même connectée au châssis de manière pivotable ou autre, par exemple comme illustré aux figures 2 à 12.

## Revendications

1. Balayeuse comprenant un châssis (10), au moins trois roues (5), un moteur de propulsion, une cabine (1) pour le conducteur, un ou plusieurs balais (2), chaque balai pouvant effectuer une rotation par rapport à une armature (19) montée à l'extrémité d'un bras porte-balai (3) qui s'étend devant et/ou à la périphérie de la cabine, ainsi que des moyens d'aspiration et de collecte de déchets, dans laquelle chacun des bras porte- balai (3) comprend :
• deux paires de profilés, chaque paire comprenant un profilé supérieur (11) et un profilé inférieur (12), les profilés supérieurs et inférieurs étant :
- respectivement reliés au châssis ou à une structure reliée au châssis, par une première paire de pivots (15, 16), permettant le pivotement des profilés par rapport au châssis (10) autour d'axes horizontaux,
- respectivement reliés à l'armature (19) du balai (2), par une deuxième paire de pivots (17, 18), permettant le pivotement des profilés par rapport à l'armature (19) autour d'axes horizontaux,
de sorte que les quatre pivots (15, 16, 17, 18) de chaque paire de profilés forment un parallélogramme déformable, les deux parallélogrammes ayant essentiellement les mêmes dimensions et étant situés dans des plans verticaux parallèles,
• un vérin (25) monté entre les paires de profilés, le vérin étant configuré pour actionner la déformation desdits parallélogrammes de manière à lever ou baisser le balai (2) dans un plan vertical,
et dans laquelle le vérin (25) est configuré de telle sorte que lorsque le balai (2) est levé au maximum, le vérin (25) est positionné en dessous des profilés supérieurs (11) desdites paires de profilés,
**caractérisée en ce que** :
• les pivots dit inférieurs (16, 18) de chacune des paires de profilés sont disposés en arrière en direction horizontale par rapport aux pivots (15 et 17) dit supérieurs,
• chacun des profilés supérieurs (11) et inférieurs (12) de chaque paire de profilés (11, 12) est formé de deux parties droites (35, 36) solidaires l'une de l'autre, une première partie (35) présente du côté de l'armature du balai (2) qui est essentiellement orientée horizontalement quand le balai est levé au maximum, et une deuxième partie (36) présente du côté du châssis (10) qui est inclinée vers le bas quand le balai (2) est levé au maximum.

2. La balayeuse selon la revendication 1, dans laquelle le vérin (25) est un vérin hydraulique comprenant un cylindre (40) relié de manière pivotable au châssis (10) ou à une structure connectée au châssis (10) par un premier pivot (27) et un piston (41) qui est solidaire d'une tige (42), ladite tige étant reliée de manière pivotable à l'armature (19) du balai (2) par un deuxième pivot (28), le piston divisant le cylindre en deux compartiments, un premier compartiment présent du côté du châssis (10) et un second compartiment présent du côté du balai (2), et dans laquelle :
• le premier pivot (27) du vérin est situé au-dessus desdites premières paires de pivots (15,16) des profilés,
• le deuxième pivot (28) du vérin est situé entre lesdites deuxièmes paires de pivots (17,18) des profilés.

3. La balayeuse selon l'une quelconque des revendications 1 ou 2, dans laquelle le vérin est un vérin hydraulique (25) comprenant un cylindre (40) relié de manière pivotable au châssis (10) ou à une structure reliée au châssis (10) par un premier pivot (27) et un piston (41) qui est solidaire d'une tige (42), ladite tige étant reliée de manière pivotable à l'armature (19) du balai (2) par un deuxième pivot (28), le piston divisant le cylindre en deux compartiments, un compartiment présent du côté du châssis (10) et un compartiment présent du côté du balai (2), dans laquelle le vérin est relié à un réservoir à fluide hydraulique et à une pompe hydraulique et/ou à un accumulateur, et dans laquelle le vérin est configuré de sorte que :
• pour lever le balai (2), le compartiment du côté de l'armature (19) est mis sous pression hydraulique, de sorte que le balai est levé par la tige (42) qui tire sur le bras porte-balai (3),
• pour baisser le balai (2), la pression dans le compartiment du côté de l'armature est diminuée, de sorte que le poids du bras porte-balai, de l'armature et du balai font descendre le balai.

4. La balayeuse selon la revendication 3, dans laquelle seul le compartiment du côté du balai est relié à ladite pompe.

5. La balayeuse selon la revendication 3, dans laquelle les deux compartiments font partie d'un circuit hydraulique comprenant la pompe, éventuellement un ou plusieurs accumulateurs, et le réservoir.

## Patentansprüche

1. Kehrmaschine, umfassend ein Chassis (10), mindestens drei Räder (5), einen Antriebsmotor, eine Fahrerkabine (1), mindestens eine Bürste (2), wobei jede Bürste sich relativ zu einer am Ende eines sich vor und/oder in der Peripherie der Kabine erstreckenden Bürstenarms (3) montierten Armatur (19) drehen kann, sowie Ansaugund Abfallsammlungseinrichtungen, wobei jeder der Bürstenarme (3) umfasst:
• zwei Profilabschnittpaare, wobei jedes Paar einen oberen (11) und einen unteren Profilabschnitt (12) umfasst, wobei der obere und untere Profilabschnitt:
- jeweils über ein erstes Paar Drehgelenke (15, 16), die ein Schwenken der Profilabschnitte relativ zum Chassis (10) um horizontale Achsen zulassen, mit dem Chassis oder einer mit dem Chassis verbundenen Struktur verbunden sind;
- jeweils über ein zweites Paar Drehgelenke (17, 18), die ein Schwenken der Profilabschnitte relativ zur Armatur (19) um horizontale Achsen zulassen, mit der Armatur (19) der Bürste (2) verbunden sind,
sodass die vier Drehgelenke (16, 16, 17, 18) jedes Profilabschnittpaares ein verformbares Parallelogramm bilden, wobei die beiden Parallelogramme im Wesentlichen die gleichen Abmessungen aufweisen und in parallelen vertikalen Ebenen liegen;
• einen zwischen den Profilabschnittpaaren montierten Heber (25), wobei der Heber derart konfiguriert ist, dass er die Verformung der Parallelogramme so bewirkt, dass die Bürste (2) in einer vertikalen Ebene angehoben oder abgesenkt wird;
und wobei der Heber (25) derart konfiguriert ist, dass der Heber (25) bei maximal angehobener Bürste (2) unter den oberen Profilabschnitten (11) der Profilabschnittpaare positioniert ist, **dadurch gekennzeichnet, dass**:
• die sog. unteren Drehgelenke (16, 18) jedes der Profilabschnittpaare in horizontaler Richtung hinter den sog. oberen Drehgelenken (15 und 17) angeordnet sind,
• jeder der oberen (11) und unteren Profilabschnitte (12) jedes Profilabschnittpaares (11, 12) aus zwei miteinander fest verbundenen geradlinien Teilen (35, 36) besteht, wobei sich ein erstes Teil (35) auf der Seite der Bürstenarmatur (2) befindet, die bei maximal angehobener Bürste im Wesentlichen horizontal orientiert ist, und ein zweites Teil (36) sich auf der Seite des Chassis (10) befindet, die bei maximal angehobener Bürste (2) nach unten geneigt ist.

2. Die Kehrmaschine nach Anspruch 1, wobei es sich beim Heber (25) um einen Hydraulikheber handelt, der einen über ein erstes Drehgelenk (27) und einen mit einer Stange (42) integrierten Kolben (41) schwenkbar mit dem Chassis (10) oder einer mit dem Chassis (10) verbundenen Struktur verbundenen Zylinder (40) umfasst; wobei die besagte Stange über ein zweites Drehgelenk (28) schwenkbar mit der Armatur (19) der Bürste (2) verbunden ist, wobei der Kolben den Zylinder in zwei Räume teilt, einen ersten Raum angeordnet auf der Seite des Chassis (10) und einen zweiten Raum auf der Seite der Bürste (2), und wobei:
• das erste Drehgelenk (27) des Hebers oberhalb der besagten ersten Drehgelenkpaare (15, 16) der Profilabschnitte angeordnet ist;
• das zweite Drehgelenk (28) des Hebers zwischen den besagten zweiten Drehgelenkpaaren (17, 18) der Profilabschnitte angeordnet ist;

3. Die Kehrmaschine nach irgendeinem der Ansprüche 1 oder 2, wobei es sich beim Heber (25) um einen Hydraulikheber handelt, der einen über ein erstes Drehgelenk (27) und einen mit einer Stange (42) integrierten Kolben (41) schwenkbar mit dem Chassis (10) oder einer mit dem Chassis (10) verbundenen Struktur verbundenen Zylinder (40) umfasst; wobei die besagte Stange über ein zweites Drehgelenk (28) schwenkbar mit der Armatur (19) der Bürste (2) verbunden ist, wobei der Kolben den Zylinder in zwei Räume teilt, einen Raum angeordnet auf der Seite des Chassis (10) und einen Raum angeordnet auf der Seite der Bürste (2), wobei der Heber an einen Hydraulikflüssigkeitstank und eine Hydraulikpumpe und/oder einen Akkumulator angeschlossen ist, und wobei der Heber derart konfiguriert ist, dass:
• der Raum auf Armaturseite (19) zum Anheben der Bürste (2) unter hydraulischen Druck gesetzt wird, sodass die Bürste angehoben wird von der Stange (42), die am Bürstenarm (3) zieht;
• der Druck im Raum auf der Armaturseite zum Absenken der Bürste (2) reduziert wird, sodass das Gewicht des Bürstenarms, der Armatur und der Armatur die Bürste absinken lassen.

4. Die Kehrmaschine nach Anspruch 3, wobei nur der Raum auf Bürstenseite an die besagte Pumpe angeschlossen ist.

5. Die Kehrmaschine nach Anspruch 3, wobei die beiden Räume Teil eines Hydraulikkreislaufs sind, der die Pumpe, evtl. mindestens einen Akkumulator und den Tank umfassen.

## Claims

1. A sweeper comprising a frame (10), at least three wheels (5), a propulsion motor, a cabin (1) for the driver, one or more brushes (2), each brush being able to perform a rotation relative to an armature (19) mounted at the end of a brush holder arm (3) that extends in front of and/or in the periphery of the cabin, as well as waste suction and collection means, wherein each brush holder arm (3) comprises:
• two pairs of profile sections, each pair comprising a top profile section (11) and a bottom profile section (12), the top and bottom profile sections being:
- respectively connected to the frame or to a structure connected to the frame, by a first pair of pivots (15, 16), allowing the pivoting of the profile sections relative to the frame (10) about horizontal axes,
- respectively connected to the armature (19) of the brush (2), by a second pair of pivots (17, 18), allowing the pivoting of the profile sections relative to the armature (19) about horizontal axes,
such that the four pivots (15, 16, 17, 18) of each pair of profile sections form a deformable parallelogram, the two parallelograms having essentially the same dimensions and being situated in parallel vertical planes,
• an actuator (25) mounted between the pairs of profile sections, the actuator being configured to actuate the deformation of said parallelograms so as to raise or lower the brush (2) in a vertical plane,
and wherein the actuator (25) is configured such that when the brush (2) is raised to the maximum, the actuator (25) is positioned below the top profile sections (11) of said pairs of profile sections,
**characterized in that**:
• the so-called bottom pivots (16, 18) of each of the pairs of profile sections are arranged backward in a horizontal direction relative to the so-called top pivots (15 and 17),
• each of the top (11) and bottom (12) profile sections of each pair of profile sections (11, 12) is formed by two straight parts (35, 36) secured to one another, a first part (35) present on the side of the armature of the brush (2) that is essentially oriented horizontally when the brush is raised to the maximum, and a second part (36) present on the side of the frame (10) that is inclined downward when the brush (2) is raised to the maximum.

2. The sweeper according to claim 1, wherein the actuator (25) is a hydraulic actuator comprising a cylinder (40) pivotably connected to the frame (10) or to a structure connected to the frame (10) by a first pivot (27) and a piston (41) that is secured to a rod (42), said rod being pivotably connected to the armature (19) of the brush (2) by a second pivot (28), the piston dividing the cylinder into two compartments, a first compartment present on the side of the frame (10) and a second compartment present on the side of the brush (2), and wherein:
• the first pivot (27) of the actuator is situated above said first pairs of pivots (15, 16) of the profile sections,
• the second pivot (28) of the actuator is situated between said second pairs of pivots (17, 18) of the profile sections.

3. The sweeper according to any one of claims 1 or 2, wherein the actuator is a hydraulic actuator (25) comprising a cylinder (40) pivotably connected to the frame (10) or to a structure connected to the frame (10) by a first pivot (27) and a piston (41) that is secured to a rod (42), said rod being pivotably connected to the armature (19) of the brush (2) by a second pivot (28), the piston dividing the cylinder into two compartments, a compartment present on the side of the frame (10) and a compartment present on the side of the brush (2), wherein the actuator is connected to a hydraulic fluid tank and to a hydraulic pump and/or to an accumulator battery, and wherein the actuator is configured such that:
• to raise the brush (2), the compartment on the side of the armature (19) is placed under hydraulic pressure, such that the brush is raised by the rod (42), which pulls on the brush holder arm (3),
• to lower the brush (2), the pressure in the compartment on the side of the armature is reduced, such that the weight of the brush holder arm, the armature and the brush cause the brush to descend.

4. The sweeper according to claim 3, wherein only the compartment on the side of the brush is connected to said pump.

5. The sweeper according to claim 3, wherein the two compartments form part of a hydraulic circuit comprising the pump, possibly one or more accumulators, and the tank.
